# EUROPÄISCHE PATENTSCHRIFT

(11) **EP 2 643 370 B1**
(45) Veröffentlichungstag und Bekanntmachung des Hinweises auf die Patenterteilung: **03.07.2019**
(21) Anmeldenummer: 11793367.1
(22) Anmeldetag: 18.11.2011
(51) Int. Cl.: C08F 220/04, C08F 222/04, C08F 220/38, C08F 228/02, C08F 216/14, C11D 3/37, C08F 220/08, C08F 222/02, C08F 290/06, C08F 8/44, C08F 220/06

(54) **COPOLYMERE, DIE CARBONSÄUREGRUPPEN, SULFONSÄUREGRUPPEN UND POLYALKYLENOXIDGRUPPEN ENTHALTEN, ALS BELAGSINHIBIERENDER ZUSATZ ZU WASCH- UND REINIGUNGSMITTELN**
COPOLYMERS CONTAINING CARBOXYLIC ACID GROUPS, SULFONIC ACID GROUPS, AND POLYALKYLENE OXIDE GROUPS, USED AS SCALE-INHIBITING ADDITIVES TO DETERGENTS AND CLEANING AGENTS
COPOLYMÈRES, QUI CONTIENNENT DES GROUPES ACIDE CARBOXYLIQUE, DES GROUPES ACIDE SULFONIQUE ET DES GROUPES POLY(OXYDE D'ALKYLÈNE), EN TANT QU'ADDITIF ANTI-DÉPÔT À DES AGENTS DE LAVAGE ET DE RINÇAGE

(30) Priorität: 23.11.2010 EP 10192194
(43) Veröffentlichungstag der Anmeldung: 02.10.2013
(73) Patentinhaber: BASF SE, 67056 Ludwigshafen am Rhein (DE)
(72) Erfinder: DETERING, Juergen, 67117 Limburgerhof (DE); URTEL, Bolette, 67240 Bobenheim-Roxheim (DE); WEBER, Heike, 68239 Mannheim (DE); ETTL, Roland, 68804 Altlussheim (DE); GAEDT, Torben, 83278 Traunstein (DE); HEINTZ, Ewald, 76889 Schweigen-Rechtenbach (DE); BASTIGKEIT, Thorsten, 42279 Wuppertal (DE); EITING, Thomas, 40589 Düsseldorf (DE); SENDOR-MUELLER, Dorota, 4313 Möhlin (CH)
(86) Internationale Anmeldenummer: PCT/EP2011/070413
(87) Internationale Veröffentlichungsnummer: WO 2012/069365

(56) Entgegenhaltungen:
- EP-A1- 0 184 894
- EP-A2- 0 798 320
- WO-A1-2010/024468
- DE-A1- 19 516 957
- JP-A- 2010 111 792

## Beschreibung

Die Erfindung betrifft Copolymere, die Carbonsäuregruppen, Sulfonsäuregruppen und Polyalkylenoxidgruppen enthalten, sowie deren Verwendung als belagsinhibierender Zusatz zu Wasch- und Reinigungsmitteln, insbesondere zu phosphathaltigen und phosphatfreien Reinigungsformulierungen für die maschinelle Geschirrreinigung.

Bei der maschinellen Geschirrspülreinigung soll das Spülgut in rückstandsfrei gereinigtem Zustand mit makellos glänzender Oberfläche anfallen, wofür üblicherweise ein Reiniger, ein Klarspüler und Regeneriersalz zur Wasserenthärtung eingesetzt werden müssen. Die seit 2001 im Markt eingeführten "3in1" Geschirrspülmittel vereinigen die Funktion von Reiniger, Klarspülmittel und Regeneriersalz in einem Produkt. Neben reinigenden Komponenten zur Entfernung der Anschmutzungen auf dem Spülgut enthalten sie integrierte Klarspültenside, die während des Klarspül- und Trocknungsgangs für einen flächigen Wasserablauf auf dem Spülgut sorgen und so Kalk- und Wasserflecken verhindern. Zusätzlich weisen sie Komponenten zur Bindung der härtebildenden Calcium- und Magnesiumionen auf. Dadurch entfällt für den Verbraucher ein Nachfüllen von Klarspüler und Salz in die Geschirrspülmaschine. Das Einbinden von weiteren Funktionen (z.B. Schutz vor Glaskorrosion und Schutz vor dem Anlaufen von Silber) führte zur Entwicklung von x in 1 (mit z.B. x = 6 oder 9) oder "all in one"-Produkten.

Copolymere aus carboxylgruppenhaltigen und sulfonsäuregruppenhaltigen Monomeren sind seit einigen Jahren wichtiger Bestandteil von phosphathaltigen und phosphatfreien maschinellen Geschirrspülmitteln. Ihr Beitrag zur Reinigungs- und Klarspülleistung und vor allem ihr Beitrag zur Verhinderung von Belägen auf dem Spülgut sind jedoch noch verbesserungsbedürftig.

EP-A 0 778 340 beschreibt die Verwendung von Copolymeren von Allylalkoholethoxylaten und Acrylsäure in phosphatfreien Geschirrspülmittelzusammensetzungen.

WO 05/08527 offenbart sulfonsäuregruppenhaltige Copolymere, die Herstellung der Copolymere und deren Verwendung als Zusatz zu Wasch-, Reinigungs- und Klarspülmitteln. Die Copolymere enthalten (a) 70 bis 100 mol-% mindestens zweier verschiedener monoethylenisch ungesättigter Carbonsäuremonomere und (b) 0 bis 30 mol-% eines oder mehrerer nichtionischer Monomere. Die Einführung der Sulfonsäuregruppen erfolgt durch Amidierung mit einer Amino-C₁-C₂-alkansulfonsäure.

WO 2005/042684 beschreibt die Verwendung spezieller Copolymere aus Acrylsäure, Methacrylsäure und Acrylsäurealkoxylaten als belagsinhibierende Additive bei der maschinellen Geschirrreinigung.

DE 102 25 794 beschreibt die Verwendung von sulfonsäuregruppenhaltigen Copolymeren aus 30 bis 95 mol-% einer monoethylenisch ungesättigten Carbonsäure, 3 bis 35 mol-% mindestens eines sulfonsäuregruppenhaltigen Monomers und 2 bis 35 mol-% eines (Meth)acrylsäurealkoxylats als belagsinhibierender Zusatz zu Wasch- und Reinigungsmitteln. In den Beispielen werden Copolymere aus (Meth)acrylsäure, Methoxypolyethylenglykolmethacrylat und Sulfoethylmethacrylsäure-Natriumsalz eingesetzt. In einem weiteren Beispiel wird ein binäres Copolymer aus Acrylsäure und 2-Acrylamido-2-methylpropansulfonsäure eingesetzt.

WO2008/132131 beschreibt die Verwendung von sulfonsäuregruppenhaltigen Copolymeren aus 30 bis 95 mol-% Acrylsäure und/oder Methacrylsäure, 3 bis 35 mol-% eines sulfonsäuregruppenhaltigen Monomers und 2 bis 35 mol-% eines nichtionischen Monomers der Formel

H₂C=C(R²)-COO-R³-[-R⁴-O-]ₙ-R⁵

als belagsinhibierender Zusatz zu Maschinengeschirrspülmitteln zur Verhinderung der Bildung von Calciumphosphat-Belägen.

WO 2010/024468 beschreibt die Verwendung von Copolymeren aus einem Carboxylatgruppen-haltigen Monomer, einem Sulfonatgruppen-haltigen Polymer und einem Allylether oder Allylalkohol-Ethoxylat mit 1 bis 5 Ethylenoxid-Gruppen als Zusatz zu Wasch- und Reinigungsmitteln. Bevorzugtes sulfonatgruppenhaltiges Monomer ist 2-Hydroxy-3-allyloxypropansulfonsäure.

Aufgabe der Erfindung ist es, Copolymere bereitzustellen, die sich durch vorteilhafte Anwendungseigenschaften, insbesondere durch ihre belagsinhibierende Wirkung und breite Einsetzbarkeit im Bereich der maschinellen Geschirrreinigung in phosphathaltigen und phosphatfreien Geschirrspülmitteln auszeichnen.

Aufgabe der Erfindung ist es weiterhin, verbesserte phosphathaltige und phosphatfreie Reinigungsformulierungen für die maschinelle Geschirrreinigung, die ein verbessertes Spülergebnis ergeben, bereitzustellen. Aufgabe der Erfindung ist es insbesondere, derartige Formulierungen bereitzustellen, welche ohne Verwendung von zusätzlichem Klarspüler ein streifen-, belag- und tropfenfreies Geschirr ergeben.

### Angepasste Beschreibungsseiten - Reinschrift

Gelöst wird die Aufgabe durch die Verwendung von Copolymeren als belagsinhibierender Zusatz zu Wasch- und Reinigungsmitteln, insbesondere zu phosphatfreien oder phosphathaltigen Reinigungsformulierungen für die maschinelle Geschirrreinigung, wobei die Copolymere
a1) 30 bis 90 Gew.-% mindestens einer monoethylenisch ungesättigten C₃-C₈-Carbonsäure, eines Anhydrids oder Salzes derselben,
a2) 3 bis 60 Gew.-% mindestens eines Sulfonsäuregruppen enthaltenden Monomers,
a3) 3 bis 60 Gew.-% mindestens eines nichtionischen Monomers der Formel (I)

   H₂C=C(R¹)(CH₂)ₓO[R²-O]ₒ-R³ (I),

   in der R¹ für Wasserstoff oder Methyl, R² für gleiche oder verschiedene, lineare oder verzweigte C₂-C₆-Alkylenreste, die blockweise oder statistisch angeordnet sein können, und R³ für Wasserstoff oder einen geradkettigen oder verzweigten C₁-C₄-Alkylrest, x 0, 1 oder 2 und o für eine Zahl von > 5 bis 50 stehen,
a4) 0 bis 30 Gew.-% eines oder mehrerer weiterer ethylenisch ungesättigter Monomere, die mit a1), a2) und a3) polymerisierbar sind,
wobei die Summe aus a1), a2), a3) und a4) 100 Gew.-% ergibt, einpolymerisiert enthalten.

Es wurde gefunden, dass durch Zusatz der erfindungsgemäßen Copolymere, die Carbonsäuregruppen, Sulfonsäuregruppen und Polyalkylenoxidgruppen enthalten, zu phosphathaltigen und phosphatfreien maschinellen Geschirrspülmitteln eine ausgezeichnete Reinigungs- und Klarspülleistung sowie eine hervorragende Belagsinhibierung sowohl gegenüber anorganischen als auch organischen Belägen erzielt werden kann.

Gelöst wird die Aufgabe weiterhin durch eine Reinigungsformulierung für die maschinelle Geschirrreinigung enthaltend als Komponenten:
a) 1 bis 20 Gew.-% mindestens eines Copolymeren, welches
   a1) 30 bis 90 Gew.-% mindestens einer monoethylenisch ungesättigten C₃-C₈-Carbonsäure, eines Anhydrids oder Salzes derselben,
   a2) 3 bis 60 Gew.-% eines Sulfonsäuregruppen enthaltenden Monomers,
   a3) 3 bis 60 Gew.-% mindestens eines nichtionischen Monomers der Formel (I)

      H₂C=C(R¹)(CH₂)ₓO[R²-O]ₒ-R³ (I),

      in der R¹ für Wasserstoff oder Methyl, R² für gleiche oder verschiedene, lineare oder verzweigte C₂-C₆-Alkylenreste, die blockweise oder statistisch angeordnet sein können, und R³ für Wasserstoff oder einen geradkettigen oder verzweigten C₁-C₄-Alkylrest, x für 0, 1 oder 2 und o für eine Zahl von > 5 bis 50 stehen,
   a4) 0 bis 30 Gew.-% von einem oder mehreren ethylenisch ungesättigten Monomeren, die mit a1), a2) und a3) polymerisierbar sind,
   wobei die Summe aus a1), a2), a3) und a4) 100 Gew.-% ergibt, einpolymerisiert enthält,
b) 0 bis 20 Gew.-% von Komponente a) verschiedene Polycarboxylate,
c) 0 bis 50 Gew.-% Komplexbildner,
d) 0 bis 70 Gew.-% Phosphate,
e) 0 bis 60 Gew.-% weitere Builder und Cobuilder,
f) 0,1 bis 20 Gew.-% nichtionische Tenside,
g) 0 bis 30 Gew.-% Bleichmittel, gegebenenfalls Bleichaktivatoren und Bleichkatalysatoren,
h) 0 bis 8 Gew.-% Enzyme,
i) 0 bis 50 Gew.-% ein oder mehrere weitere Zusatzstoffe wie anionische oder zwitterionische Tenside, Alkaliträger, Korrosionsinhibitoren, Entschäumer, Farbstoffe, Duftstoffe, Füllstoffe, organische Lösungsmittel, Tablettierhilfsmittel, Disintegrationsmittel, Verdicker, Löslichkeitsvermittler und Wasser,
wobei die Summe der Komponenten a) bis i) 100 Gew.-% ergibt.

Als Komponente a1) enthält das Copolymer 30 bis 90 Gew.-% mindestens einer monoethylenisch ungesättigten C₃-C₈-Carbonsäure, eines Anhydrids oder eines Salzes derselben.

Geeignete ungesättigte C₃-C₈-Carbonsäuren sind insbesondere Acrylsäure, Methacrylsäure, Ethacrylsäure, Vinylessigsäure, Allylessigsäure, Crotonsäure, Maleinsäure, Fumarsäure, Mesaconsäure und Itaconsäure sowie deren wasserlösliche Salze. Soweit die genannten ungesättigten C₃-C₈-Carbonsäuren Anhydride bilden können sind auch diese als Monomere a1) geeignet, beispielsweise Maleinsäureanhydrid, Itaconsäureanhydrid und Methacrylsäureanhydrid.

Bevorzugte monoethylenisch ungesättigte C₃-C₈-Carbonsäuren sind Acrylsäure und Methacrylsäure sowie deren wasserlösliche Salze. Wasserlösliche Salze sind insbesondere die Natrium- und Kaliumsalze der Säuren.

Als Komponente a2) enthält das Copolymer 3 bis 60 Gew.-% mindestens eines Sulfonsäuregruppen enthaltenden Monomers.

Bei den Sulfonsäuregruppen-haltigen Monomeren handelt es sich bevorzugt um solche der Formeln (IIa) und (IIb)

H₂C=CH-X-SO₃H (IIa),

H₂C=C(CH₃)-X-SO₃H (IIb),

worin X für eine optional vorhandene Spacergruppe steht, die ausgewählt sein kann aus -(CH₂)ₙ- mit n = 0 bis 4, -C₆H₄-, -CH₂-O-C₃H₄-, -C(O)-NH-C(CH₃)₂-, -C(O)-NH-CH(CH₂CH₃)-, -C(O)NH-CH(CH₃)CH₂-, -C(O)NH-C(CH₃)₂CH₂-, -C(O)NH-CH₂CH(OH)CH₂-, -C(O)NH-CH₂-, -C(O)NH-CH₂CH₂- und -C(O)NH-CH₂CH₂CH₂-.

Besonders bevorzugte Sulfonsäuregruppen-haltige Monomere sind dabei 1-Acryl-amido-1-propansulfonsäure (X = -C(O)NH-CH(CH₂CH₃)- in Formel IIa), 2-Acrylamido-2-propansulfonsäure (X = -C(O)NH-CH(CH₃)CH₂- in Formel IIa), 2-Acrylamido-2-methylpropansulfonsäure (AMPS, X = -C(O)NH-C(CH₃)₂CH₂- in Formel IIa), 2-Methacrylamido-2-methylpropansulfonsäure (X = -C(O)NH-C(CH₃)₂CH₂- in Formel IIb), 3-Methacrylamido-2-hydroxypropansulfonsäure (X = -C(O)NH-CH₂CH(OH)CH₂- in Formel IIb), Allylsulfonsäure (X = CH₂ in Formel IIa), Methallylsulfonsäure (X = CH₂ in Formel IIb), Allyloxybenzolsulfonsäure (X = -CH₂-O-C₃H₄- in Formel IIa), Methallyloxybenzolsulfonsäure (X = -CH₂-O-C₃H₄- in Formel IIb), 2-Hydroxy-3-(2-propenyloxy)propansulfonsäure, 2-Methyl-2-propen-1-sulfonsäure (X = CH₂ in Formel IIb), Styrolsulfonsäure (X = C₆H₄ in Formel IIa), Vinylsulfonsäure (X nicht vorhanden in Formel IIa), 3-Sulfopropylacrylat (X = -C(O)O-CH₂CH₂CH₂- in Formel IIa), 2-Sulfoethylmethacrylat (X = -C(O)O-CH₂CH₂- in Formel IIb), 3-Sulfopropylmethacrylat (X = -C(O)O-CH₂CH₂CH₂- in Formel IIb), Sulfomethacrylamid (X = -C(O)NH- in Formel IIb), Sulfomethylmethacrylamid (X = -C(O)NH-CH₂- in Formel IIb) sowie Salze der genannten Säuren. Geeignete Salze sind im Allgemeinen wasserlösliche Salze, bevorzugt die Natrium-, Kalium und Ammoniumsalze der genannten Säuren.

Insbesondere bevorzugt sind 1-Acrylamidopropansulfonsäure, 2-Acrylamido-2-propansulfonsäure, 2-Acrylamido-2-methylpropansulfonsäure (AMPS), 2-Methacrylamido-2-methylpropansulfonsäure, 3-Methacrylamido-2-hydroxypropansulfonsäure, 2-Hydroxy-3-(2-propenyloxy)propansulfonsäure, 2-Sulfoethylmethacrylat, Styrolsulfonsäure, Vinylsulfonsäure, Allylsulfonsäure (ALS) und Methallylsulfonsäure sowie Salze der genannten Säuren.

Ganz besonders bevorzugte Sulfonsäuregruppen-haltige Monomere sind 2-Acrylamido-2-methylpropansulfonsäure (AMPS) und Allylsulfonsäure sowie deren wasserlösliche Salze, insbesondere deren Natrium-, Kalium und Ammoniumsalze.

Als Komponente a3) enthält das Copolymer 3 bis 60 Gew.-% mindestens eines nichtionischen Monomers der Formel (I)

H₂C=C(R¹)(CH₂)ₓO[R²-O]ₒ-R³ (I),

in der R¹ für Wasserstoff oder Methyl, R² für gleiche oder verschiedene C₂-C₆-Alkylenreste, die linear oder verzweigt und blockweise oder statistisch angeordnet sein können, und R³ für Wasserstoff oder einen geradkettigen oder verzweigten C₁-C₄-Alkylrest, x für 0, 1, 2 und o für eine Zahl von > 5 bis 50 stehen,

Die Alkylenreste können auch blockweise und statistisch angeordnet sein, also in ein oder mehreren Blöcken aus gleichen Alkylenoxidresten blockweise und daneben in ein oder mehreren Blöcken aus zwei oder mehr verschiedenen Alkylenoxidresten statistisch angeordnet sein. Dieser wird von der Formulierung "blockweise oder statistisch angeordnet" mit umfasst.

Bevorzugte nichtionische Monomere a3) sind solche auf Basis von Allylalkohol (R¹ = H; x = 1) und Isoprenol (R¹ = Methyl; x = 2).

Das nichtionische Monomer a3) enthält bevorzugt im Mittel 8 bis 40, besonders bevorzugt 10 bis 30, speziell 10 bis 25 Alkylenoxid-Einheiten. Der Index o in Formel (I) bezieht sich auf die mittlere Zahl der Alkylenoxid-Einheiten.

Bevorzugte Alkylenoxideinheiten R²-O sind Ethylenoxid, 1,2-Propylenoxid und 1,2-Butylenoxid, besonders bevorzugt sind Ethylenoxid und 1,2-Propylenoxid.

In einer speziellen Ausführungsform enthalten die nichtionischen Monomere a3) nur Ethylenoxid-Einheiten. In einer weiteren speziellen Ausführungsform enthalten die nichtionischen Monomere a3) Ethylenoxid- und 1,2-Propylenoxid-Einheiten, die blockweise oder statistisch angeordnet sein können.

Bevorzugt ist R³ Wasserstoff oder Methyl.

Als Komponente a4) kann das Copolymer 0 bis 30 Gew.-% von einem oder mehreren weiteren ethylenisch ungesättigten Monomeren enthalten, die mit a1), a2) und a3) polymerisierbar sind.

Als weitere ethylenisch ungesättigte Monomere a4) kommen beispielsweise Acrylamid, t-Butylacrylamid, Vinylacetat, Vinylmethylether, Hydroxybutylvinylether, 1-Vinylpyrrolidon, 1-Vinylcaprolactam, 1-Vinylimidazol, 2-Vinylpyridin, 4-Vinylpyridin, Methylmethacrylat, Ethylacrylat, Isobuten, Diisobuten, Isoprenol, 1-Alkene wie 1-Octen, N,N-Dimethylacrylamid und Styrol in Betracht.

Bevorzugt beträgt der Anteil an einpolymerisierten Monomeren a1), insbesondere an einpolymerisierter Acrylsäure, Methacrylsäure oder eines wasserlöslichen Salzes dieser Säuren, 40 bis 90 Gew.-%, besonders bevorzugt 45 bis 85 Gew.-% und insbesondere bevorzugt 50 bis 85 Gew.-%. Der Anteil an einpolymerisierten Monomeren a2), insbesondere an einpolymerisierter 2-Acrylamido-2-methylpropansulfonsäure, liegt vorzugsweise bei 4 bis 40 Gew.-%, besonders bevorzugt bei 6 bis 35 Gew.-% und insbesondere bevorzugt 8 bis 32 Gew.-%. Der Anteil a3) an Monomereinheiten der Formel (I) liegt vorzugsweise bei 4 bis 40 Gew.-%, besonders bevorzugt bei 6 bis 35 Gew.-% und insbesondere bei 8 bis 32 Gew.-%.

Falls Monomere a4) in den erfindungsgemäßen Copolymeren enthalten sind, beträgt ihr Anteil bevorzugt bis zu 20 Gew.-%, besonders bevorzugt bis zu 15 Gew.-% und speziell bis zu 10 Gew.-%.

Die erfindungsgemäßen Copolymere a) weisen im Allgemeinen ein mittleres Molekulargewicht M_{w} von 2000 bis 200 000 g/mol, bevorzugt von 3000 bis 100 000 g/mol, besonders bevorzugt von 10 000 bis 50 000 g/mol auf, bestimmt durch Gelpermeationschromatographie bei Raumtemperatur mit Wasser als Elutionsmittel gegen Polyacrylat-Standards.

Ihre K-Werte liegen bei 15 bis 100, vorzugsweise bei 20 bis 80, besonders bevorzugt bei 30 bis 50, gemessen bei pH 7 in 1 gew.-%iger wässriger Lösung bei 25°C nach H. Fikentscher, Cellulose-Chemie Band 13, Seiten 58 - 64 und 71 - 74 (1932).

Die erfindungsgemäßen Copolymere können durch radikalische Polymerisation der Monomere hergestellt werden. Dabei kann nach allen bekannten radikalischen Polymerisationsverfahren gearbeitet werden. Neben der Polymerisation in Substanz sind insbesondere die Verfahren der Lösungspolymerisation und der Emulsionspolymerisation zu nennen, wobei die Lösungspolymerisation bevorzugt ist.

Die Polymerisation wird vorzugsweise in Wasser als Lösungsmittel durchgeführt. Sie kann jedoch auch in alkoholischen Lösungsmitteln, insbesondere C₁-C₄-Alkoholen, wie Methanol, Ethanol und Isopropanol, oder Mischungen dieser Lösungsmittel mit Wasser vorgenommen werden.

Als Polymerisationsinitiatoren eignen sich sowohl thermisch, redoxchemisch als auch photochemisch (Photoinitiatoren) zerfallende und dabei Radikale bildende Verbindungen.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für geeignete thermische Initiatoren sind anorganische Peroxoverbindungen, wie Peroxodisulfate (Ammonium- und vorzugsweise Natriumperoxoxdisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperneodecanoat, tert.-Butylperbenzoat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril) und Azobis(2-amidopropan)dihydrochlorid.

Diese Initiatoren können in Kombination mit reduzierenden Verbindungen als Starter/Regler-Systeme zum Einsatz kommen. Als Beispiele für derartige reduzierende Verbindungen seien phosphorhaltige Verbindungen, wie phosphorige Säure, Hypophosphite und Phosphinate, schwefelhaltige Verbindungen, wie Natriumhydrogensulfit, Natriumsulfit und Natriumformaldehydsulfoxilat, sowie Hydrazin genannt.

Häufig werden auch Redoxinitiator-Systeme verwendet, welche aus einer Peroxoverbindung, einem Metallsalz und einem Reduktionsmittel bestehen. Beispiele für geeignete Peroxoverbindungen sind Wasserstoffperoxid, Peroxodisulfat (als Ammonium-, Natrium- oder Kaliumsalz), Peroxosulfate, sowie organische Peroxoverbindungen wie tert.-Butylhydroperoxid, Cumolhydroperoxid oder Dibenzoylperoxid. Geeignete Metallsalze sind vor allem Eisen(II)-salze wie Eisen(II)-sulfat-heptahydrat. Als Reduktionsmittel sind geeignet Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon.

Beispiele für geeignete Photoinitiatoren sind Benzophenon, Acetophenon, Benzyldialkylketone und deren Derivate.

Vorzugsweise werden thermische Initiatoren eingesetzt, wobei anorganische Peroxoverbindungen, insbesondere Natriumperoxodisulfat, bevorzugt sind. Besonders vorteilhaft kommen die Peroxoverbindungen in Kombination mit schwefelhaltigen Reduktionsmitteln, insbesondere Natriumhydrogensulfit, als Redoxinitiatorsystem zum Einsatz. Bei Verwendung dieses Starter/Regler-Systems werden Copolymere erhalten, die als Endgruppen -SO₃⁻Na⁺ und/oder -SO₄⁻Na⁺ enthalten und sich durch besondere Reinigungskraft und belagsinhibierende Wirkung auszeichnen.

Alternativ können auch phosphorhaltige Starter/Regler-Systeme verwendet werden, z. B. Hypophosphite/Phosphinate.

Die Mengen an Photoinitiator bzw. Starter/Regler-System sind auf die jeweils verwendeten Substanzen abzustimmen. Wird beispielsweise das bevorzugte System Peroxodisulfat/Hydrogensulfit verwendet, so werden üblicherweise 2 bis 6 Gew.-%, vorzugsweise 3 bis 5 Gew.-%, Peroxodisulfat und in der Regel 5 bis 30 Gew.-%, vorzugsweise 5 bis 10 Gew.-%, Hydrogensulfit, jeweils bezogen auf die Monomere a1), a2) a3) und gegebenenfalls a4), eingesetzt.

Gewünschtenfalls können auch Polymerisationsregler zum Einsatz kommen. Geeignet sind z.B. Schwefelverbindungen, wie Mercaptoethanol, 2-Ethylhexylthioglykolat, Thioglykolsäure und Dodecylmercaptan. Wenn Polymerisationsregler verwendet werden, beträgt ihre Einsatzmenge in der Regel 0,1 bis 15 Gew.-%, bevorzugt 0,1 bis 5 Gew.-% und besonders bevorzugt 0,1 bis 2,5 Gew.-%, bezogen auf Monomere a1), a2) a3) und gegebenenfalls a4).

Die Polymerisationstemperatur liegt in der Regel bei 20 bis 200°C, bevorzugt bei 20 bis 150°C und besonders bevorzugt bei 20 bis 120°C.

Die Polymerisation kann unter atmosphärischem Druck durchgeführt werden, vorzugsweise wird sie jedoch in geschlossenem System unter dem sich entwickelnden Eigendruck vorgenommen.

Die Copolymere können im sauren Zustand anfallen, sie können aber auch, falls für die Anwendung gewünscht, durch Zugabe von Basen, insbesondere von Natronlauge, bereits während der Polymerisation oder nach Beendigung der Polymerisation, neutralisiert oder teilneutralisiert werden. Der bevorzugte pH-Wert der wässrigen Copolymerlösungen liegt im Bereich von 3 bis 8,5.

Die erfindungsgemäß verwendeten Copolymere können direkt in Form der bei der Herstellung mittels Lösungspolymerisation in Wasser anfallenden wässrigen Lösungen oder in getrockneter Form (erhalten z.B. durch Sprühtrocknung, Sprühgranulierung, Fluidized Spray Drying, Walzentrocknung oder Gefriertrocknung) zum Einsatz kommen.

Neben der Komponente a) können die erfindungsgemäßen Reinigungsformulierungen als Komponente b) 0 bis 20 Gew.-% von Komponente a) verschiedene Polycarboxylate enthalten. Diese können hydrophil oder hydrophob modifiziert sein. Falls von Komponente a) verschiedene Polycarboxylate enthalten sind, sind diese im Allgemeinen in Mengen von 0,1 bis 20 Gew.-% enthalten.

Geeignet sind Alkalimetallsalze von Homo- und Copolymeren der Acrylsäure oder der Methacrylsäure. Zur Copolymerisation eignen sich monoethylenisch ungesättigte Dicarbonsäuren wie Maleinsäure, Fumarsäure, Maleinsäureanhydrid, Itaconsäure und Citraconsäure. Ein geeignetes Polymer ist insbesondere Polyacrylsäure, die bevorzugt eine Molmasse von 2000 bis 40 000 g/mol aufweist. Aufgrund ihrer überlegenen Löslichkeit kann aus dieser Gruppe die kurzkettige Polyacrylsäure, die Molmassen von 2000 bis 10 000 g/mol, insbesondere 3000 bis 8000 g/mol, aufweist, bevorzugt sein. Geeignet sind weiterhin copolymere Polycarboxylate, insbesondere solche der Acrylsäure mit Methacrylsäure und der Acrylsäure oder Methacrylsäure mit Maleinsäure und/oder Fumarsäure.

Es können auch Copolymere aus mindestens einem Monomeren aus der Gruppe bestehend aus monoethylenisch ungesättigten C₃-C₁₀-Mono- oder Dicarbonsäuren oder deren Anhydriden, wie Maleinsäure, Maleinsäureanhydrid, Acrylsäure, Methacrylsäure, Fumarsäure, Itaconsäure und Citraconsäure mit mindestens einem hydrophil oder hydrophob modifizierten Monomeren wie nachfolgend aufgezählt eingesetzt werden.

Geeignete hydrophobe Monomere sind beispielsweise Isobuten, Diisobuten, Buten, Penten, Hexen und Styrol, Olefine mit 10 oder mehr Kohlenstoffatomen oder deren Gemischen wie beispielsweise 1-Decen, 1-Dodecen, 1-Tetradecen, 1-Hexadecen, 1-Octadecen, 1-Eicosen, 1-Docosen, 1-Tetracosen und 1-Hexacosen, C₂₂-alpha-Olefin, ein Gemisch aus C₂₀-C₂₄-alpha-Olefinen und Polyisobuten mit im Mittel 12 bis 100 C-Atomen.

Geeignete hydrophile Monomere sind Monomere mit Sulfonat- oder Phosphonatgruppen, sowie nichtionische Monomere mit Hydroxyfunktion oder Alkylenoxidguppen. Beispielsweise seien genannt: Allylalkohol, Isoprenol, Methoxypolyethylenglykol(meth)acrylat, Methoxypolypropylenglykol(meth)acrylat, Methoxypolybutylenglykol(meth)acrylat, Methoxypoly(propylenoxid-co-ethylenoxid)(meth)acrylat, Ethoxypolyethylenglykol(meth)acrylat, Ethoxypolypropylenglykol(meth)acrylat, Ethoxypolybutylenglykol(meth)acrylat und Ethoxypoly(propylenoxid-co-ethylenoxid)(meth)acrylat. Die Polyalkylenglykole enthalten dabei 3 bis 50, insbesondere 5 bis 40 und vor allem 10 bis 30 Alkylenoxideinheiten.

Besonders bevorzugte Sulfonsäuregruppen-haltige Monomere sind dabei 1-Acrylamido-1-propansulfonsäure, 2-Acrylamido-2-propansulfonsäure, 2-Acrylamido-2-methylpropansulfonsäure, 2-Methacrylamido-2-methylpropansulfonsäure, 3-Methacrylamido-2-hydroxypropansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Styrolsulfonsäure, Vinylsulfonsäure, 3-Sulfopropylacrylat, 2-Sulfoethylmethacrylat, 3-Sulfopropylmethacrylat, Sulfomethacrylamid, Sulfomethylmethacrylamid sowie Salze der genannten Säuren, wie deren Natrium-, Kalium- oder Ammoniumsalze.

Besonders bevorzugte Phosphonatgruppen-haltige Monomere sind die Vinylphosphonsäure und ihre Salze.

Darüber hinaus können auch amphotere und kationische Polymere zusätzlich eingesetzt werden.

Als Komponente c) können die erfindungsgemäßen Reinigungsformulierungen 0 bis 50 Gew.-% eines oder mehrerer Komplexbildner enthalten. Falls Komplexbildner enthalten sind, sind diese in Mengen von 0,1 bis 50 Gew.-%, bevorzugt 1 bis 45 Gew.-% und besonders bevorzugt 1 bis 40 Gew.-% enthalten. Bevorzugte Komplexbildner sind ausgewählt aus der Gruppe bestehend aus Nitrilotriessigsäure, Ethylendiamintetraessigsäure, Diethylentriaminpentaessigsäure, Hydroxyethylethylendiamintriessigsäure und Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure sowie deren Salzen. Besonders bevorzugte Komplexbildner c) sind Methylglycindiessigsäure und deren Salze.

Als Komponente d) kann das erfindungsgemäße Reinigungsmittel 0 bis 70 Gew.-% Phosphate enthalten. Enthält das Reinigungsmittel Phosphate, enthält es diese im Allgemeinen in Mengen von 1 bis 70 Gew.-%, bevorzugt von 5 bis 60 Gew.-%, besonders bevorzugt von 20 bis 55 Gew.-%.

Unter der Vielzahl der kommerziell erhältlichen Phosphate haben die Alkalimetallphosphate unter besonderer Bevorzugung von Pentanatrium- beziehungsweise Pentakaliumtriphosphat (Natrium- beziehungsweise Kaliumtripolyphosphat) in der Wasch- und Reinigungsmittel-Industrie die größte Bedeutung.

Als Phosphate für Geschirrreinigungsmittel geeignet sind insbesondere Alkalimetallphosphate und polymere Alkalimetallphosphate, die in Form ihrer alkalischen, neutralen oder sauren Natrium- oder Kaliumsalze zugegen sein können. Beispiele derartiger Phosphate sind Trinatriumphosphat, Tetranatriumdiphosphat, Dinatriumdihydrogendiphosphat, Pentanatriumtripolyphosphat, sogenanntes Natriumhexametaphosphat, oligomeres Trinatriumphosphat mit einem Oligomerisierungsgrad von 5 bis 1000, bevorzugt 5 bis 50, und die entsprechenden Kaliumsalze, oder Gemische von Natriumhexametaphosphat und den entsprechenden Kaliumsalzen, oder Gemische der Natrium- und Kaliumsalze. Insbesondere bevorzugt sind Tripolyphosphatsalze.

Als Komponente e) kann das erfindungsgemäße Reinigungsmittel 0 bis 60 Gew.-% Builder und Cobuilder enthalten. Enthält das Reinigungsmittel Builder und Cobuilder, enthält es diese im Allgemeinen in Mengen von 0,1 bis 60 Gew.-%. Builder und Cobuilder sind wasserlösliche oder wasserunlösliche Substanzen, deren Hauptaufgabe im Binden von Calcium- und Magnesiumionen besteht.

Dies können niedermolekulare Carbonsäuren sowie deren Salze wie Alkalicitrate, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und α-Hydroxypropionsäure sein.

Eine weitere Substanzklasse mit Cobuildereigenschaften, welche in den erfindungsgemäßen Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Eine weitere Substanzklasse im Buildersystem sind die Silikate. Enthalten sein können kristalline schichtförmige Silikate mit der allgemeinen Formel NaMSiₓO₂ₓ₊₁ yH₂O, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem SiO₂ : Na₂O-Verhältnis von 1 bis 3,5, vorzugsweise von 1,6 bis 3 und insbesondere von 2 bis 2,8 zum Einsatz kommen.

Weiterhin werden Carbonate und Hydrogencarbonate eingesetzt, von denen die Alkalisalze, insbesondere Natriumsalze bevorzugt werden.

Als Komponente f) enthalten die erfindungsgemäßen Reinigungsformulierungen 0,1 bis 20 Gew.-% nichtionische Tenside, üblicher Weise schwach oder niedrig schäumende nichtionische Tenside. Diese sind bevorzugt in Anteilen von 0,1 bis 15 Gew.-%, besonders bevorzugt von 0,25 bis 10 Gew.-% enthalten.

Geeignete nichtionische Tenside umfassen die Tenside der allgemeinen Formel (III)

R¹⁸-O-(CH₂CH₂O)ₚ-(CHR¹⁷CH₂O)ₘ-R¹⁹ (III)

worin R¹⁸ ein linearer oder verzweigter Alkylrest mit 8 bis 22 C-Atomen ist,
R¹⁷ und R¹⁹ unabhängig voneinander Wasserstoff oder ein linearer oder verzweigter Alkylrest mit 1-10 C-Atomen oder H sind, wobei R¹⁷ bevorzugt Methyl ist,
p und m unabhängig voneinander 0 bis 300 sind. Bevorzugt ist p = 1 - 100 und
m = 0 - 30.

Die Tenside der Formel (III) können sowohl statistische Copolymere als auch Block-Copolymere sein, bevorzugt sind sie Block-Copolymere.

Weiterhin können Di- und Multiblockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside gibt die EP-A 851 023 sowie die DE-A 198 19 187.

Es können auch Gemische mehrerer verschiedener nichtionischer Tenside enthalten sein.

Als Komponente g) können die erfindungsgemäßen Reinigungsformulierungen 0 bis 30 Gew.-% Bleichmittel, gegebenenfalls Bleichaktivatoren und gegebenenfalls Bleichkatalysatoren enthalten. Falls die Reinigungsformulierungen Bleichmittel, Bleichaktivatoren oder Bleichkatalysatoren enthält, enthält sie diese in Mengen von insgesamt 0,1 bis 30 Gew.-%, bevorzugt 1 bis 30 Gew.-% und besonders bevorzugt 5 bis 30 Gew.-%.

Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat.

Ebenfalls als Sauerstoffbleichmittel einsetzbar sind Persulfate und Wasserstoffperoxid.

Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure.

Außerdem können auch folgende Sauerstoffbleichmittel in der Reinigerformulierung Verwendung finden:
Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind.

Chlorhaltige Bleichmittel sowie die Kombination von chlorhaltigen Bleichmittel mit peroxidhaltigen Bleichmitteln können ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind Natriumhypochlorit, Calciumhypochlorit, Kaliumhypochlorit, Magnesiumhypochlorit, Kaliumdichloroisocyanurat oder Natriumdichloroisocyanurat.

Chlorhaltige Bleichmittel werden in Mengen von im Allgemeinen 0,1 bis 20 Gew.-%, bevorzugt von 0,2 bis 10 Gew.-%, besonders bevorzugt von 0,3 bis 8 Gew.-%, bezogen auf die gesamte Reinigerformulierung, eingesetzt.

Weiterhin können in geringen Mengen Bleichmittelstabilisatoren wie beispielsweise Phosphonate, Borate, Metaborate, Metasilikate oder Magnesiumsalze zugegeben werden.

Bleichaktivatoren sind Verbindungen, die unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- beziehungsweise iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze).

Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA und TMAQ.

Bleichaktivatoren werden in Mengen von im Allgemeinen 0,1 bis 10 Gew.-%, bevorzugt von 1 bis 9 Gew.-%, besonders bevorzugt von 1,5 bis 8 Gew.-%, bezogen auf die gesamte Reinigerformulierung eingesetzt.

Zusätzlich zu den konventionellen Bleichaktivatoren oder an deren Stelle können auch sogenannte Bleichkatalysatoren enthalten sein. Bei diesen Stoffen handelt es sich um bleichverstärkende Übergangsmetallsalze beziehungsweise Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Ksmplexe mit stickstoffhaltigen Tripod-Liganden sowie Cobalt-, Eisen-, Kupfer- und Ruthenium-Aminkomplexe sind als Bleichkatalysatoren verwendbar.

Als Komponente h) können die erfindungsgemäßen Reinigungsformulierungen 0 bis 8 Gew.-% Enzyme enthalten. Falls die Reinigungsformulierungen Enzyme enthalten, enthalten sie diese im Allgemeinen in Mengen von 0,1 bis 8 Gew.-%. Dem Reinigungsmittel können Enzyme zugesetzt werden, um die Leistung der Reinigungsmittel zu steigern oder unter milderen Bedingungen die Reinigungsleistung in gleicher Qualität zu gewährleisten. Zu den am häufigsten verwendeten Enzymen gehören Lipasen, Amylasen, Cellulasen und Proteasen. Weiterhin können beispielsweise auch Esterasen, Pectinasen, Lactasen und Peroxidasen eingesetzt werden.

Des Weiteren können die erfindungsgemäßen Reinigungsmittel als Komponente i) 0 bis 50 Gew.-% einen oder mehrere weitere Zusatzstoffe wie anionische oder zwitterionische Tenside, Alkaliträger, Korrosionsinhibitoren, Entschäumer, Farbstoffe, Duftstoffe, Füllstoffe, organische Lösungsmittel, Tablettierhilfsmittel, Disintegrationsmittel, Verdicker, Löslichkeitsvermittler und Wasser enthalten. Falls die Reinigungsformulierung weitere Zusatzstoffe enthält, sind diese im Allgemeinen in Mengen von 0,1 bis 50 Gew.-% enthalten.

Die Formulierungen können anionische oder zwitterionische Tenside enthalten, bevorzugt in Abmischung mit nichtionischen Tensiden. Geeignete anionische und zwitterionischer Tenside sind in EP-A 851 023 sowie DE-A 198 19 187 genannt.

Als weitere Bestandteile der Reinigerformulierung können Alkaliträger zugegen sein. Neben den bereits bei den Buildersubstanzen genannten Ammonium- oder Alkalimetallcarbonate, Ammonium- oder Alkalimetallhydrogencarbonate und Ammonium- oder Alkalimetallsesquicarbonate können als Alkaliträger auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, die sich durch Trübungen, Irisieren, Schlieren und Linien auf den Gläsern bemerkbar macht, werden Glaskorrosionsinhibitoren eingesetzt. Bevorzugte Glaskorrosionsinhibitoren sind aus der Gruppe der Magnesium-Zink und Bismuth-Salze und Komplexe.

Paraffinöle und Silikonöle können optional als Entschäumer und zum Schutz von Kunststoff- und Metalloberflächen eingesetzt werden. Entschäumer werden generell in Anteilen von 0,001 Gew.-% bis 5 Gew.-% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.

Ein geeigneter Füllstoff ist beispielsweise Natriumsulfat.

Die erfindungsgemäßen Reinigungsformulierungen können in flüssiger oder fester Form, ein- oder mehrphasig, als Tabletten oder in Form anderer Dosiereinheiten, verpackt oder unverpackt bereitgestellt werden.

Die Erfindung wird durch die nachfolgenden Beispiele näher erläutert.

### Beispiele

Die Bestimmung der Molekulargewichte erfolge in allen Fällen mittels Gelpermeationschromatographie (GPC). Dabei wurden 2 Säulen (Suprema Linear M) und eine Vorsäule (Suprema Vorsäule) alle der Marke Suprema-Gel (HEMA) von der Firma Polymer Standard Services (Mainz, Deutschland) bei 35°C mit einer Flußrate von 0,8 ml/min betrieben. Der Eluent waren die mit TRIS bei pH 7 gepufferten wässrigen Lösung, die mit 0,15 M NaCl und 0,01 M NaN3 versetzt waren. Die Kalibrierung erfolgte mit einem Na-PAA Standard, deren integrale Molekulargewichtsverteilungskurve durch SEC- Laserlichtstreukopplung bestimmt worden war, nach dem Kalibrierverfahren von M.J.R. Cantow u.a. (J. Polym. Sci. , A-1, 5(1967)1391-1394), allerdings ohne die dort vorgeschlagene Konzentrationskorrektur. Alle Proben wurden mit einer 50%igen Natronlauge auf pH 7 eingestellt, ein Teil dieser Lösung wurde mit VE-Wasser auf einem Feststoffgehalt von 1,5 mg/mL verdünnt, und 12 Stunden lang gerührt. Anschließend wurden die Proben filtriert. Jeweils 100 µL wurden mittels einer Sartorius Minisart RC 25 (0.2 µm) eingespritzt.

### Vergleichsbeispiel V1

In einem Reaktor wurden 503,9 g VE-Wasser zusammen mit 2,36 g einer 50 gew.-%igen wässrigen Lösung von phosphoriger Säure vorgelegt. Anschließend wurde unter Stickstoff-Atmosphäre auf 100 °C Innentemperatur erhitzt. Bei dieser Temperatur wurden gleichzeitig 58,9 g einer 10,0 gew.-%igen wässrigen Natriumperoxodisulfat-Lösung, 39,2 g einer 40 gew.-%igen wässrigen Natriumbisulfit-Lösung und 394,0 g eines Gemischs bestehend aus 10,9 Gew.-% destillierter Acrylsäure, 11,2 Gew.-% Methoxypolyethylenglykolmethacrylat (M_{w} = 1086 g/mol), 11,9 Gew.-% destillierter Methacrylsäure, 4,5 Gew.-% 2-Sulfoethylmethacrylsäure-Natriumsalz und 61,5 % VE-Wasser, separat und parallel unter Rühren zudosiert. Das Monomer-Gemisch wurde innerhalb von 5 Stunden, Natriumperoxodisulfat innerhalb von 5,25 Stunden und Natriumbisulfit innerhalb von 5 Stunden zudosiert. Anschließend wurde noch 2 Stunden bei 100°C nachpolymerisiert. Danach wurde auf Raumtemperatur abgekühlt und danach mit 90,0 g einer 50 gew.-%igen wässrigen Natronlauge auf einen pH-Wert von 7,4 eingestellt. pH- und K-Wert, Molekulargewichte Mₙ und M_{w} sowie der Feststoffgehalt wurden bestimmt und das Produktgemisch visuell beurteilt.

### Vergleichsbeispiel V2

In einem Reaktor wurden 904,6 g VE-Wasser zusammen mit 2,36 g einer 50 gew.-%igen wässrigen Lösung von phosphoriger Säure vorgelegt. Anschließend wurde unter Stickstoff-Atmosphäre auf 100°C Innentemperatur erhitzt. Bei dieser Temperatur wurden gleichzeitig 117,8 g einer 10,2 gew.-%igen wässrigen Natriumperoxodisulfat-Lösung, 78,4 g einer 40 gew.-%igen wässrigen Natriumbisulfit-Lösung und 752,8 g eines Gemischs bestehend aus 11,4 Gew.-% destillierter Acrylsäure, 11,8 Gew.-% Methoxypolyethylenglykolmethacrylat (M_{w} = 1086 g/mol), 12,5 Gew.-% destillierter Methacrylsäure und 64,3 Gew.-% VE-Wasser und 140,8 g einer 25 gew.-%igen Natriumvinylsulfonat-Lösung, separat und parallel unter Rühren zudosiert. Das Monomer-Gemisch wurde innerhalb von 5 Stunden, Natriumperoxodisulfat innerhalb von 5,25 Stunden und Natriumbisulfit innerhalb von 5 Stunden zudosieren. Anschließend wurde noch 2 Stunden bei 100°C nachpolymerisiert. Danach wurde auf Raumtemperatur abgekühlt und danach mit 1 g einer 50 gew.-%igen wässrigen Natronlauge auf einen pH-Wert von 7,2 eingestellt. pH- und K-Wert, Molekulargewichte Mₙ und M_{w} sowie der Feststoffgehalt wurden bestimmt, und das Produktgemisch visuell beurteilt.

### Beispiel 1

In einem Reaktor wurden 225,0 g VE-Wasser zusammen mit 225,0 g eines Allylalkoholalkoxylats der Formel CH₂=CHCH₂O-(EO_{4,1})(EO_{12,3}PO_{5,5})-H vorgelegt. Anschließend wurde unter Stickstoff-Atmosphäre auf 90 °C Innentemperatur erhitzt. Bei dieser Temperatur wurden gleichzeitig 107,1 g einer 7 gew.-%igen wässrigen Natriumperoxodisulfat-Lösung, 46,9 g einer 40 gew.-%igen wässrigen Natriumbisulfit-Lösung und 994,8 g eines Gemischs bestehend aus 30,1 Gew.-% destillierter Acrylsäure, 22,9 Gew.-% 2-Acrylamido-2-methylpropansulfonsäure, 0,006 Gew.-% 4-Methoxyphenol-Lösung, 4,4 Gew.-% Natronlauge und 42,6 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurden 110,0 g einer 50 gew.-%igen wässrigen Natronlauge innerhalb 1,5 Stunden bei 90°C Innentemperatur zugeben. Anschließend wurde noch 1 Stunde bei 90°C nachpolymerisiert. Danach wurden 382,7 g VE-Wasser zugeben und dabei die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 2

In einem Reaktor wurden 300,0 g VE-Wasser zusammen mit 120,0 g Allylalkoholalkoxylat der Formel CH₂=CHCH₂O-(EO_{4,1})(EO_{12,3}PO_{5,5})-H vorgelegt. Anschließend wurde unter Stickstoff-Atmosphäre auf 90°C Innentemperatur erhitzt. Bei dieser Temperatur wurden gleichzeitig 85,7 g einer 7 gew.-%igen wässrigen Natriumperoxodisulfat-Lösung, 45,0 g einer 40 gew.-%igen wässrigen Natriumbisulfit-Lösung und 880,5 g eines Gemischs bestehend aus 40,9 Gew.-% destillierter Acrylsäure, 13,8 Gew.-% 2-Acrylamido-2-methylpropansulfonsäure, 0,003 Gew.-% 4-Methoxyphenol-Lösung, 5,3 Gew.-% Natronlauge und 40,0 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurden 148,9 g einer 50 gew.-%igen wässrigen Natronlauge innerhalb von 1,5 Stunden bei 90°C Innentemperatur zugegeben. Anschließend wurde 1 Stunde bei 90°C nachpolymerisiert. Danach wurden 132,7 g VE-Wasser zugeben und dabei die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 3

In einem Reaktor wurden 300,0 g VE-Wasser zusammen mit 60,0 g Allylalkoholalkoxylat der Formel CH₂=CHCH₂O-(EO_{4,1})(EO_{12,3}PO_{5,5})-H vorgelegt. Anschließend wurde unter Stickstoff-Atmosphäre auf 90 °C Innentemperatur erhitzt. Bei dieser Temperatur wurden gleichzeitig 85,7 g einer 7 gew.-%igen wässrigen Natriumperoxodisulfat-Lösung, 75,0 g einer 40 gew.-%igen wässrigen Natriumbisulfit-Lösung und 915,3 g eines Gemischs bestehend aus 52,4 Gew.-% destillierter Acrylsäure, 6,6 Gew.-% 2-Acrylamido-2-methylpropansulfonsäure, 0,002 Gew.-% 4-Methoxyphenol-Lösung, 2,5 Gew.-% Natronlauge und 38,5 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurden 148,9 g einer 50 gew.-%igen wässrigen Natronlauge in 1,5 Stunden bei 90°C Innentemperatur zugeben. Anschließend wurde noch 1 Stunde bei 90°C nachpolymerisiert. Danach wurden 132,7 g VE-Wasser zugeben und dabei die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 4

In einem Reaktor wurden 225,0 g VE-Wasser zusammen mit 225,0 g Allylalkoholalkoxylat der Formel CH₂=CHCH₂O-(EO_{4,1})(EO_{12,3}PO_{5,5})-H vorgelegt. Anschließend wurde unter Stickstoff-Atmosphäre auf 90 °C Innentemperatur aufgeheizt. Bei dieser Temperatur wurden gleichzeitig 112,0 g einer 7 gew.-%igen wässrigen Natriumperoxodisulfat-Lösung, 103,1 g einer 40 gew.-%igen wässrigen Natriumbisulfit-Lösung und 931,4 g eines Gemischs bestehend aus 48,3 Gew.-% destillierter Acrylsäure, 8,1 Gew.-% 2-Acrylamido-2-methylpropansulfonsäure, 0,002 Gew.-% 4-Methoxyphenol-Lösung, 3,1 Gew.-% Natronlauge und 40,5 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurden 188,7 g einer 50 gew.-%igen wässrigen Natronlauge innerhalb von 1,5 Stunden bei 90°C Innentemperatur zugegeben. Nachfolgend wurde 1 Stunde bei 90°C nachpolymerisiert. Danach wurden 350,0 g VE-Wasser zugeben und die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 5

In einem Reaktor wurden 150,0 g VE-Wasser zusammen mit 50,0 g Allylalkoholalkoxylat der Formel CH₂=CHCH₂O-(EO₁₆)-H vorgelegt. Anschließend wurde unter Stickstoff-Atmosphäre auf 90°C Innentemperatur erhitzt. Bei dieser Temperatur wurden gleichzeitig 214,0 g einer 7 gew.-%igen wässrigen Natriumperoxodisulfat-Lösung, 50,0 g einer 40 gew.-%igen wässrigen Natriumbisulfit-Lösung und 818,7 g eines Gemischs aus 36,7% destillierter Acrylsäure, 18,5 Gew.-% 2-Acrylamido-2-methylpropansulfonsäure, 0,001 Gew.-% 4-Methoxyphenol-Lösung, 7,5 Gew.-% Natronlauge und 37,7 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurde 162,2 g einer 50 gew.-%igen wässrigen Natriumhydroxid-Lösung innerhalb von 1,5 Stunden bei 90°C Innentemperatur zugeben. Anschließend wurde noch 1 Stunde bei 90°C nachpolymerisiert. Danach wurde die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 6

In einem Reaktor wurden 250,0 g VE-Wasser zusammen mit 50,0 g Allyalkoholalkoxylat (CH₂=CHCH₂O-(EO_{7,7}PO_{3,0})-H) vorgelegt. Anschließend wurde unter Stickstoff-Atmosphäre auf 90°C Innentemperatur erhitzt. Bei dieser Temperatur wurden gleichzeitig 75,0 g einer 7 gew.-%igen wässrigen Natriumperoxodisulfat-Lösung, 50,0 g einer 30,7 gew.-%igen wässrigen Natriumhypophosphit-Lösung und 760,4 g eines Gemischs bestehend aus 39,5 gew.-%iger destillierter Acrylsäure, 20,0 Gew.-% 2-Acrylamido-2-methylpropansulfonsäure, 0,002 Gew.-% 4-Methoxyphenol-Lösung, 7,6 Gew.-% Natronlauge und 32,9 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulaufs wurden 120,0 g einer 50 gew.-%igen wässrigen Natronlauge in 1,5 Stunden bei 90°C Innentemperatur zugeben. Nachfolgend wurde 1 Stunde bei 90°C nachpolymerisiert. Danach wurden 75,0 g VE-Wasser zugegeben und dabei die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 7

In einem Reaktor wurden 250,0 g VE-Wasser zusammen mit 50,0 g Allyalkoholalkoxylat der Formel CH₂=CHCH₂O-(EO₆)(EO_{5,1}PO_{3,6})-H vorgelegt. Anschließend wurde unter Stickstoff-Atmosphäre auf 90 °C Innentemperatur aufgeheizt. Bei dieser Temperatur wurden gleichzeitig 75,0 g einer 7 gew.-%igen wässrigen Natriumperoxodisulfat-Lösung, 50,0 g einer 40 gew.-%igen wässrigen Natriumbisulfit-Lösung und 760,4 g eines Gemischs bestehend aus 39,4 Gew.-% destillierter Acrylsäure, 19,9 Gew.-% 2-Acrylamido-2-methylpropansulfonsäure, 0,002 Gew.-% 4-Methoxyphenol-Lösung, 7,6 Gew.-% Natronlauge und 33,1 Gew.-% VE-Wasser separat und parallel unter Rühren zudosiert. Das Monomer-Gemisch wurde innerhalb von 3 Stunden, Natriumperoxodisulfat innerhalb von 4,5 Stunden und Natriumbisulfit innerhalb von 2,75 Stunden zudosiert. Nach Ende des Monomer-Zulauf wurden 132,0 g einer 50 gew.-%igen wässrigen Natronlauge in 1,5 Stunden bei 90° C Innentemperatur zugeben. Anschließend wurde noch 1 Stunde bei 90°C nachpolymerisiert. Danach wurden 50,0 g VE-Wasser zugeben und dabei die Polymer-Lösung auf Raumtemperatur abgekühlt. pH- und K-Wert, Molekulargewichte Mₙ und M_{w} sowie der Feststoffgehalt wurden bestimmt und das Produktgemisch visuell beurteilt.

### Beispiel 8

In einem Glasreaktor, ausgestattet mit Rührer, Thermometer, pH-Elektrode und mehreren Zulaufeinrichtungen, wurden 30 g deionisiertes Wasser, 59 g einer wässrigen Natriumallylsulfonat-Lösung (35 Gew.-% Natriumallylsulfonat) und 0,01 g Eisen(II)sulfat-Heptahydrat vorgelegt und auf eine Polymerisationsstarttemperatur von 20°C temperiert (Vorlage). In einem separaten Zulaufgefäß wurden 72 g Acrylsäure mit 72 g deionisiertem Wasser homogen vermischt (Lösung A). In einem weiteren separaten Zulaufgefäß wurden 10,5 g Isoprenolpolyethylenglykol der Formel CH₂=C(CH₃)CH₂CH₂-(EO_{11,3})-H mit 10,5 g deionisiertem Wasser homogen vermischt (Lösung B). Zu Lösung B wurde nach dem Vermischen 0,75 g 2-Mercaptoethanol gegeben. Parallel dazu wurde eine dritte Lösung aus 5 g Natriumhydroxymethansulfinat, (Brüggolit SFS Fa. Brüggemann GmbH) in 45 g Wasser hergestellt (Lösung C).

Nach Herstellung von Lösung A, B und C wurde 6 g Wasserstoffperoxid (30 Gew.-% in Wasser) zu dem Vorlagegemisch gegeben. Zeitgleich wurde mit der Zugabe von Lösung A, Lösung B und Lösung C zur gerührten Vorlage begonnen.

Lösung A wurde hierbei über 60 Minuten mit einer Dosiergeschwindigkeit von 144 g/h zugegeben.

Lösung B wurde über den genannten Zeitraum von 60 Minuten parallel mit einer Dosiergeschwindigkeit von 21,75 g/h zugegeben.

Lösung C wurde über den genannten Zeitraum von 60 Minuten parallel mit einer Dosiergeschwindigkeit von 10 g/h zugegeben. Anschließend wurde die Dosiergeschwindigkeit der Lösung C auf 50 g/h erhöht und über einen Zeitraum von 10 Minuten unter Rühren in das Vorlagegemisch gepumpt. Nach vollständiger Zugabe der Lösungen A, B und C wurde kein Peroxid mehr im Reaktionsgefäß gefunden.

Anschließend wurde die erhaltene Polymerlösung mit etwa 2,8 g einer 50 gew.-%igen Natriumhydroxid-Lösung auf einen pH-Wert von 2,6 eingestellt.

Das erhaltene Copolymer fiel in einer farblosen Lösung an, die einen Feststoffgehalt von 37,0 % aufwies. Das mittlere Molekulargewicht des Copolymers lag bei M_{w} 18 000 g/mol.

pH- und K-Wert, Molekulargewichte Mₙ und M_{w} sowie der Feststoffgehalt wurden bestimmt und das Produktgemisch visuell beurteilt.

Die Zusammensetzung der Polymere ist in Tabelle 1 wiedergegeben.

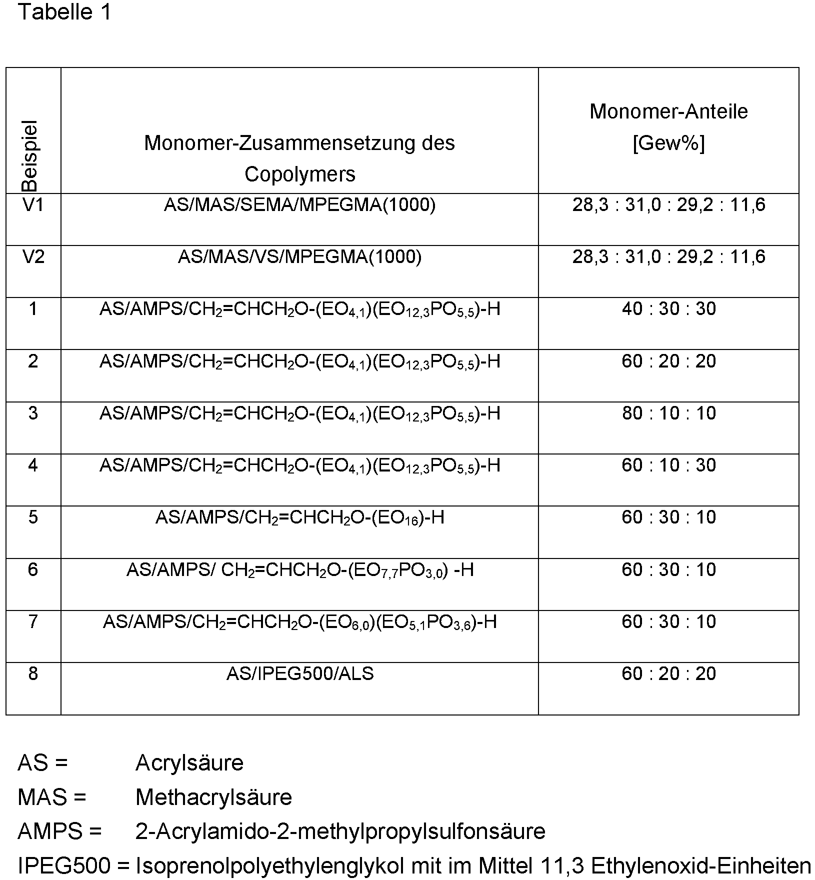

Die analytischen Daten der Polymere sind in Tabelle 2 wiedergegeben.

**Tabelle 2: Analytische Daten für die Beispiele.**

| Beispiel | Feststoffgehalt [%]^{a} | K Wert^{b} (pH 7) | pH (tq) | Mw^{c} | Visuelle Beurteilung |
|---|---|---|---|---|---|
| V1 | 18,1 | 31,9 | 7,2 | 14 800 | Klare, leicht gelbliche, viskose Lösung |
| V2 | 18,8 | 22,3 | 7,2 | 5 930 | Klare, leicht gelbliche, viskose Lösung |
| 1 | 33,2 | 44,2 | 4,5 | 20 400 | Klare, farblose, viskose Lösung |
| 2 | 40,4 | 50,9 | 4,5 | 30 600 | Klare, farblose, viskose Lösung |
| 3 | 40,2 | 49,8 | 4,5 | 26 500 | Klare, farblose, viskose Lösung |
| 4 | 41,1 | 49,7 | 4,5 | 31 200 | Klare, farblose, viskose Lösung |
| 5 | 41,6 | 39,5 | 4,5 | 29 100 | Klare, farblose, viskose Lösung |
| 6 | 40,9 | 35,2 | 4,5 | 21 200 | Klare, farblose, viskose Lösung |
| 7 | 42,6 | 43,3 | 4,5 | 20 200 | Leicht trübe, farblose, viskose Lösung |
| 8 | 39,4 | 26,9 | 2,5 | 29 700 | Klare, farblose, viskose Lösung |

| | | | | | |
|---|---|---|---|---|---|
| ^{a)} ISO 3251, (0.25 g, 150°C, 2h) ^{b)} bestimmt durch Fikentscher Methode mit einer 1%iger Lösung in VE-Wasser ^{c)} bestimmt durch Gel Permeation Chromatographie | | | | | |

Die Polymere wurden in den folgenden Phosphat-freien Formulierungen PF1 und PF2, sowie in der Phosphat-basierten Formulierung P1 getestet. Die Zusammensetzung der Prüf-Formulierungen ist in Tabelle 3 (Angaben in Gew.-%) wiedergegeben.

**Tabelle 3**

| | **PF 1** | **PF 2** | **P1** |
|---|---|---|---|
| Protease | 1 | 2 | 2 |
| Amylase | 0,2 | 0,5 | 0,5 |
| Tensid | 5 | 5 | 4,5 |
| Polymer | 10 | 14 | 6,5 |
| Natriumpercarbonat | 10,5 | 12,5 | 12,5 |
| Tetraacetylethylendiamin | 4 | 4 | 4 |
| Natriumdisilikat | 2 | 5 | 4 |
| Natriumtripolyphosphat | | | 40 |
| Soda Schwer | 18,8 | 25 | 25 |
| Natriumcitrat-Dihydrat | 33 | 25 | |
| Zitronensäure | | 5 | |
| Methylglycindiessigsäure | 15 | 0 | |
| Hydroxyethan-(1,1-diphosphonsäure) | 0,5 | 2 | 1 |

Dabei wurden folgende Versuchbedingungen eingehalten:

| | |
|---|---|
| Geschirrspüler: | Miele G 1222 SCL |
| Programm: | 65°C (mit Vorspülen) |
| Spülgut: | 3 Messer (WMF Tafelmesser Berlin, Monoblock) |
| | 3 Trinkglas Amsterdam 0,2L |
| | 3 FRÜHSTÜCKSTELLER "OCEAN BLAU" (MELAMIN) |
| | 3 Porzellanteller: FAHNENTELLER FLACH 19 CM |
| Anordnung: | Messer in der Besteckschublade, Gläser im oberen Korb, Teller im unteren Korb einsortiert |
| Geschirrspülmittel: | 21 g |
| Schmutzzugabe: | 50 g Ballastschmutz wird aufgetaut mit der Formulierung nach dem Vorspülen dosiert, Zusammensetzung siehe unten |
| Klarspültemperatur: | 65°C |
| Wasserhärte: | 21 °dH (Ca/Mg):HCO3 (3:1):1.35 |
| Spülcyclen: | 15; dazwischen jeweils 1 h Pause (10 min geöffnete Tür, 50 min geschlossene Tür) |
| Auswertung: | Visuell nach 15 Spülcyclen |

Die Bewertung des Spülguts erfolgte nach 15 Cyclen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive Spots = 1 bis keine Spots = 10) als auch für Belag (1 = sehr starker Belag, 10 = kein Belag).

### Zusammensetzung des Ballastschmutzes:

| | |
|---|---|
| Stärke: | 0,5 % Kartoffelstärke, 2,5 % Bratensoße |
| Fett: | 10,2 % Margarine |
| Protein: | 5,1 % Eigelb, 5,1 % Milch |
| Andere: | 2,5 % Tomatenketchup, 2,5 % Senf, 0,1 % Benzoesäure, 71,4 % Wasser |

### Ergebnis:

Insbesondere auf Glas und Messer zeigen die erfindungsgemäßen Copolymere eine gegenüber den Vergleichsbeispielen verbesserte Wirkung.

In den nachfolgenden Tabellen sind die addierten Noten für Belagsbildung und Spotting auf Messern und Trinkgläsern aufgeführt.

### Phosphatfreie Formulierung PF 1

| Polymer | Messer (S + B) | Gläser (S + B) | Summe (max 40) |
|---|---|---|---|
| V1 | 12 | 12 | 24 |
| V2 | 11 | 11 | 22 |
| | | | |
| 2 | 14 | 15 | 29 |
| 3 | 16 | 16 | 32 |
| 4 | 16 | 11 | 27 |
| 5 | 14 | 16 | 30 |
| 6 | 12 | 14 | 26 |
| 7 | 13 | 14 | 27 |
| 8 | 14 | 14 | 28 |

| | | | |
|---|---|---|---|
| S = Spotting B = Belag | | | |

### Phosphathaltige Formulierung P1

| Polymer | Messer (S + B) | Gläser (S + B) | Summe (max 40) |
|---|---|---|---|
| V1 | 19 | 12 | 31 |
| V2 | 18 | 13 | 31 |
| | | | |
| 1 | 18 | 15 | 33 |
| 2 | 19 | 13 | 32 |

Die erfindungsgemäßen Polymere wurden auch in der Formulierung PF2 getestet. Auch mit der Formulierung PF2 schnitten die erfindungsgemäßen Copolymere besser als die Vergleichspolymere ab.

## Patentansprüche

1. Reinigungsformulierung für die maschinelle Geschirrreinigung enthaltend als Komponenten:
a) 1 bis 20 Gew.-% mindestens eines Copolymeren, welches
a1) 30 bis 90 Gew.-% mindestens eines Monomers ausgewählt aus der Gruppe bestehend aus Acrylsäure, Methacrylsäure und deren Salzen,
a2) 3 bis 60 Gew.-% mindestens eines Sulfonsäuregruppen enthaltenden Monomers, ausgewählt aus der Gruppe bestehend aus Allylsulfonsäure und 2-Acrylamido-2-methylpropansulfonsäure,
a3) 3 bis 60 Gew.-% mindestens eines nichtionischen Monomers der Formel I
H₂C=C(R¹)(CH₂)ₓO[R²-O]ₒ-R³ (I)
in der R¹ Wasserstoff oder Methyl, R² gleiche oder verschiedene, lineare oder verzweigte C₂-C₆-Alkylenreste, die blockweise oder statistisch angeordnet sein können, und R³ Wasserstoff oder ein geradkettiger oder ver
zweigter C₁-C₄-Alkylrest ist, x 0, 1 oder 2 und o eine natürliche Zahl von > 5
bis 50 ist,
a4) 0 bis 30 Gew.-% eines oder mehrerer weiterer ethylenisch ungesättigter Monomere, die mit a1), a2) und a3) polymerisierbar sind,
wobei die Summe aus a1), a2), a3) und a4) 100 Gew.-% ergibt, einpolymerisiert enthält,
b) 0 bis 20 Gew.-% von Komponente a) verschiedene Polycarboxylate,
c) 0 bis 50 Gew.-% Komplexbildner,
d) 0 bis 70 Gew.-% Phosphate,
e) 0 bis 60 Gew.-% weitere Builder und Cobuilder,
f) 0,1 bis 20 Gew.-% nichtionische Tenside,
g) 0 bis 30 Gew.-% Bleichmittel und gegebenenfalls Bleichaktivatoren und Bleichkatalysatoren,
h) 0 bis 8 Gew.-% Enzyme,
i) 0 bis 50 Gew.-% eines oder mehrerer weiterer Zusatzstoffe wie anionische oder zwitterionische Tenside, Alkaliträger, Korrosionsinhibitoren, Entschäumer, Farbstoffe, Duftstoffe, Füllstoffe, organische Lösungsmittel, Tablettierhilfsmittel, Disintegrationsmittel, Verdicker, Löslichkeitsvermittler und Wasser,
wobei die Summe der Komponenten a) bis i) 100 Gew.-% ergibt.

2. Reinigerformulierung nach Anspruch 1, **dadurch gekennzeichnet, dass** in Formel (I) x = 1 ist.

3. Reinigerformulierung nach Anspruch 2, **dadurch gekennzeichnet, dass** in Formel
(I) R¹ = H ist.

4. Reinigerformulierung nach Anspruch 1, **dadurch gekennzeichnet, dass** in Formel (I) x = 2 ist.

5. Reinigerformulierung nach Anspruch 4, **dadurch gekennzeichnet, dass** in Formel
(I) R¹ = Methyl ist.

6. Reinigerformulierung nach einem der Ansprüche 1 bis 5, **dadurch gekennzeichnet,**
**dass** das nichtionische Monomer der Formel (I) Ethylenoxid und/oder Propylenoxid
blockweise und/oder statistisch einpolymerisiert enthält.

7. Reinigerformulierung nach einem der Ansprüche 1 bis 6, dadurch gekennzeich35 net, dass das nichtionische Monomer der Formel (I) im Mittel 8 bis 40 Alkylenoxid-Einheiten einpolymerisiert enthält.

8. Reinigerformulierung nach einem der Ansprüche 1 bis 7, **dadurch gekennzeichnet,**
**dass** das Copolymer a) 40 bis 90 Gew.-% Monomere a1), 4 bis 40 Gew.-% Monomere a2) und 4 bis 40 Gew.-% Monomere a3) enthält.

9. Reinigerformulierung nach Anspruch 8, **dadurch gekennzeichnet, dass** das Copolymer a) 45 bis 85 Gew.-% Monomere a1), 6 bis 35 Gew.-% Monomere a2) und 6 bis 35 Gew.-% Monomere a3) enthält.

10. Verwendung der Copolymere a) wie in einem der Ansprüche 1 bis 9 definiert als belagsinbibierender Zusatz in phosphatfreien oder phosphathaltigen Reinigungsformulierungen für die maschinelle Geschirrreinigung.

## Claims

1. A detergent formulation for machine dishwashing, comprising, as components:
a) 1 to 20% by weight of at least one copolymer which comprises, in copolymerized form,
a1) 30 to 90% by weight of at least one monomer selected from the group consisting of acrylic acid, methacrylic acid and the salts thereof,
a2) 3 to 60% by weight of at least one monomer comprising sulfo groups, selected from the group consisting of allysulfonic acid and 2-acrylamido-2-methylpropanesulfonic acid,
a3) 3 to 60% by weight of at least one nonionic monomer of the formula I
H₂C=C(R¹) (CH₂)ₓO[R²-O]ₒ-R³ (I)
in which R¹ is hydrogen or methyl, R² are identical or different, linear or branched C₂-C₆-alkylene radicals which may be arranged in blocks or randomly, and R³ is hydrogen or a straight-chain or branched C₁-C₄-alkyl radical, x is 0, 1 or 2 and o is a natural number from >5 to 50,
a4) 0 to 30% by weight of one or more further ethylenically unsaturated monomers which are polymerizable with a1), a2) and a3),
where the sum of a1), a2), a3) and a4) adds up to 100% by weight,
b) 0 to 20% by weight of polycarboxylates other than component a),
c) 0 to 50% by weight of complexing agents,
d) 0 to 70% by weight of phosphates,
e) 0 to 60% by weight of further builders and cobuilders,
f) 0.1 to 20% by weight of nonionic surfactants,
g) 0 to 30% by weight of bleaches and optionally bleach activators and bleach catalysts,
h) 0 to 8% by weight of enzymes,
i) 0 to 50% by weight of one or more further additives such as anionic or zwitterionic surfactants, alkali carriers, corrosion inhibitors, defoamers, dyes, fragrances, fillers, organic solvents, tabletting aids, disintegrants, thickeners, solubilizers and water,
wherein the sum of components a) to i) adds up to 100% by weight.

2. The detergent formulation according to claim 1, wherein x in formula (I) is 1.

3. The detergent formulation according to claim 2, wherein R¹ in formula (I) is H.

4. The detergent formulation according to claim 1, wherein x in formula (I) is 2.

5. The detergent formulation according to claim 4, wherein R¹ in formula (I) is methyl.

6. The detergent formulation according to any of claims 1 to 5, wherein the nonionic monomer of the formula (I) comprises, in copolymerized form in blocks and/or randomly, ethylene oxide and/or propylene oxide.

7. The detergent formulation according to any of claims 1 to 6, wherein the nonionic monomer of the formula (I) comprises, in copolymerized form, on average from 8 to 40 alkylene oxide units.

8. The detergent formulation according to any of claims 1 to 7, wherein the copolymer a) comprises 40 to 90% by weight of monomers a1), 4 to 40% by weight of monomers a2) and 4 to 40% by weight of monomers a3).

9. The detergent formulation according to claim 8, wherein the copolymer a) comprises 45 to 85% by weight of monomers a1), 6 to 35% by weight of monomers a2) and 6 to 35% by weight of monomers a3) .

10. The use of the copolymers a) as defined in any of claims 1 to 9 as a scale-inhibiting additive in phosphate-free or phosphate-containing detergent formulations for machine dishwashing.

## Revendications

1. Formulation de nettoyage pour le nettoyage de vaisselle en machine contenant, comme constituants :
a) 1 à 20% en poids d'au moins un copolymère qui contient, sous forme copolymérisée,
a1) 30 à 90% en poids d'au moins un monomère choisi dans le groupe constitué par l'acide acrylique, l'acide méthacrylique et leurs sels,
a2) 3 à 60% d'au moins un monomère contenant des groupes acide sulfonique, choisi dans le groupe constitué par l'acide allylsulfonique et l'acide 2-acrylamido-2-méthylpropanesulfonique,
a3) 3 à 60% en poids d'au moins un monomère non ionique de formule I
**H₂C=C(R¹) (CH₂)ₓO[R²-O]ₒ-R³** **(I).**
dans laquelle R¹ est hydrogène ou méthyle, R² est des radicaux alkylène en C₂-C₆ identiques ou différents, linéaires ou ramifiés, qui peuvent être disposés par blocs ou de manière statistique, et R³ est hydrogène ou un radical alkyle en C₁-C₄ linéaire ou ramifié, x vaut 0,1 ou 2 et o est un nombre naturel de >5 à 50,
a4) 0 à 30% en poids d'un ou de plusieurs autres monomères éthyléniquement insaturés, qui sont polymérisables avec a1), a2) et a3),
la somme de a1), a2), a3) et a4) valant 100% en poids,
b) 0 à 20% en poids de polycarboxylates différents du composant a),
c) 0 à 50% en poids de complexants,
d) 0 à 70% en poids de phosphates,
e) 0 à 60% en poids d'autres adjuvants et co-adjuvants,
f) 0,1 à 20% en poids d'agents tensioactifs non ioniques,
g) 0 à 30% en poids d'agents de blanchiment et le cas échéant d'activateurs et de catalyseurs de blanchiment,
h) 0 à 8% en poids d'enzymes,
i) 0 à 50% en poids d'un ou de plusieurs autres additifs, tels que des agents tensioactifs anioniques ou zwittérioniques, des supports d'alcalis, des inhibiteurs de corrosion, des antimousses, des colorants, des parfums, des charges, des solvants organiques, des adjuvants de transformation en comprimés, des agents de désintégration, des épaississants, des promoteurs de solubilité et de l'eau,
la somme des composants a) à i) valant 100% en poids.

2. Formulation de nettoyage selon la revendication 1, **caractérisée en ce que**, dans la formule (I), x = 1.

3. Formulation de nettoyage selon la revendication 2, **caractérisée en ce que**, dans la formule (I), R¹ = H.

4. Formulation de nettoyage selon la revendication 1, **caractérisée en ce que**, dans la formule (I), x = 2.

5. Formulation de nettoyage selon la revendication 4, **caractérisée en ce que**, dans la formule (I), R¹ = méthyle.

6. Formulation de nettoyage selon l'une quelconque des revendications 1 à 5, **caractérisée** en ce quele monomère non ionique de formule (I) contient de l'oxyde d'ethylène et/ou de l'oxyde de propylène sous forme copolymérisée par blocs et/ou de manière statistique.

7. Formulation de nettoyage selon l'une quelconque des revendications 1 à 6, **caractérisée** en ce quele monomère non ionqiue de formule (I) contient en moyenne 8 à 40 motifs d'oxyde d'alkylène sous forme copolymérisée.

8. Formulation de nettoyage selon l'une quelconque des revendications 1 à 7, **caractérisée en ce que** le copolymère a) contient 40 à 90% en poids de monomères a1), 4 à 40% en poids de monomères a2) et 4 à 40% en poids monomères de a3).

9. Formulation de nettoyage selon la revendication 8, **caractérisée en ce que** le copolymère a) contient 45 à 85% en poids de monomères a1), 6 à 35% en poids de monomères a2) et 6 à 35% en poids de monomères a3).

10. Utilisation des copolymères a) comme définis dans l'une quelconque des revendications 1 à 9 comme additif inhibant les incrustations dans des formulations de nettoyage exemptes de phosphates ou contenant des phosphates pour le nettoyage de vaisselle en machine.
